# EUROPEAN PATENT SPECIFICATION

(11) **EP 1 235 096 B1**
(45) Date of publication and mention of the grant of the patent: **19.04.2006**
(21) Application number: 02251228.9
(22) Date of filing: 22.02.2002
(51) Int. Cl.: G02B 1/04, G02C 7/04, B29D 11/00

(54) **Colorant for use in tinting contact lenses and method for manufacturing tinted contact lenses**
Farbstoff zum Färben von Kontaktlinsen und Verfahren zur Herstellung gefärbter Kontaktlinsen
Colorant pour teinter des lentilles de contact et méthode de fabrication de lentilles de contact teintées

(30) Priority: 23.02.2001 US 792671; 20.12.2001 US 27579
(43) Date of publication of application: 28.08.2002
(73) Proprietor: Johnson & Johnson Vision Care, Inc., Jacksonville, FL 32256 (US)
(72) Inventor: Molock, Frank F., Orange Park, Florida 32073 (US); Chehab, Khaled, Jacksonville, Florida 32246 (US); Ford, James D., Orange Park, Florida 32003 (US); Kindt-Larsen, Ture, 2840 Holte (DK); Walker, Craig W., Jacksonville, Florida 32224 (US); Wood, Joseph M., Jacksonville, Florida 32205 (US); Weber, Julieann E., Atlantic Beach, Florida 32233 (US); Collins, Gary L., Jacksonville, Florida 32257 (US)
(74) Representative: Fisher, Adrian John

(56) References cited:
- EP-A- 0 187 137
- EP-A- 0 382 005
- EP-A- 0 393 532
- EP-A- 0 983 837
- US-A- 5 713 963

## Description

### Field of the Invention

The invention relates to colorants useful in the production of tinted contact lenses. In particular, the invention provides a one step process for tinting contact lenses and colorants for use in the process.

### Background of the Invention

The use of tinted contact lenses to alter the natural color of the iris is well known. Generally, the tinted portion of the lens is located in the center of the lens, the portion of the lens that will overlay either or both the pupil and iris of the lens wearer. It is also well known in the tinting of contact lenses that the entire lens may be lightly tinted as a visibility or locator tint.

Colorants used to produce tinted lenses generally are composed of a binding polymer and pigments. The known colorants require the use of crosslinking agents to form covalent bonds between the lens materials and the binding polymer in order to form stable, tinted lenses. By "stable, tinted lenses" is meant that the tints do not bleed or leach out from the lens or from one portion of the lens to another. Additionally, in some of the known methods for forming tinted lenses, it is required that the lens body be formed prior to the introduction of the colorant onto the lens. Other processes and colorants require multiple steps for use alone or in conjunction with specialized rings to protect the outer portions of the lens from the colorant.

Thus, the known colorants and processes for producing tinted lenses introduce one or both of additional time and additional materials into the normal lens manufacturing process. Therefore, a need exists for a colorant, and method for producing contact lenses using the colorant, that eliminate some or all of these disadvantages.

### Detailed Description of the Invention and Preferred Embodiments

The invention provides colorants for use in the manufacture of tinted contact lenses, and a method for the tinting of contact lenses using the colorants of the invention. When the colorants of the invention are applied to uncured lens material that is subsequently cured, the binding polymer forms an interpenetrating polymer network with the lens material. Thus the colorant becomes embedded within the lens material resulting in a stable, tinted lens. This is advantageous in that the colorants do not require the use of covalent bonds to aid in the entrapment of the colorant's pigment within the lens. Further, the colorants of the invention transfer from a mold surface to the lens material in a way that results in a finished lens with a high resolution image of the pattern printed using the colorant.

In one embodiment, the invention provides a colorant for use in tinting contact lenses, the cotorant comprising, consisting essentially of, and consisting of: one or more pigments, one or more solvents, and a binding polymer, wherein the binding polymer is capable of forming an interpenetrating polymer network with a lens material. In another embodiment, the invention provides a method for manufacturing a tinted contact lens comprising, consisting essentially of, and consisting of the steps of: a.) applying to a molding surface of a mold a tinting-effective amount of a colorant, the colorant comprising, consisting essentially of, and consisting of: one or more pigments, one or more solvents and a binding polymer; b.) dispensing a lens-forming amount of a lens material into the mold; c.) swelling the colorant in the lens material and diffusion of the lens material into the colorant; and d.) curing the lens material in the mold under conditions suitable to form the tinted contact lens, wherein the binding polymer and the lens material form an interpenetrating polymer network. Also described herein is a mold for use in manufacturing a tinted contact lens comprising, consisting essentially of, and consisting of a first and second mold half, wherein at least one molding surface of the first and second mold halves comprises, consists essentially of and consists of: one or more pigments, one or more solvents, and a binding polymer, wherein the binding polymer is capable of forming an interpenetrating polymer network with a lens material.

For purposes of the invention, "interpenetrating polymer network" or "IPN" is defined as the combination of two or more independent polymers in which one polymer is synthesized and/or cross-linked in the presence of the other. Thus, some degree of interpenetration occurs within the network structures. Typically, the independent polymers used to form the IPN are in network form. One type of IPN, specifically a semi-IPN, is composed of one or more polymers that are cross-linked and one or more polymers that are not substantially cross-linked as disclosed by "Interpenetrating Polymer Networks: An Overview" by Sperling, L.H. in *Interpenetrating Polymer Networks*, Edited by Klempner, Sperling, and Utracki, pp 3-6(1994). For purposes of the invention, the type of interpenetrating polymer network used is a semi-IPN. In one embodiment, the semi-IPN is formed using a lens material, which is crosslinked and a binding polymer which is not substantially crosslinked. For the purposes of this invention not substantially crosslinked means that the non-crosslinked material is not subjected to conventional crosslinking conditions prior to contact with the lens material. Semi-IPNs may be formed in one step, or in a series of steps, which are known as sequential semi-IPNs. One of ordinarily skilled in the art will recognize that, the presence of cross-linking agents, either through addition or as impurities, can create a reaction environment that favors the formation of a sequential interpenetrating polymer network.

For purposes of the invention, by "molding surface" is meant a mold surface used to form a surface of a lens.

It is a discovery of the invention that by using a binding polymer that is capable of forming an interpenetrating polymer network with a lens material, the need for formation of covalent bonds between the colorant and lens material to form a stable, tinted lens is eliminated. Stability of the tinted lens is provided by entrapment of the pigments within entanglements of the binding polymer and the lens base polymer. The binding polymers of the invention are made from a homopolymer or copolymer, or combinations thereof, having similar solubility parameters to each other and the binding polymer has similar solubility parameters to the lens material. These binding polymers may contain functional groups that render the polymers and copolymers of the binding polymer capable of interactions with each other. The functional groups must be such that the groups of one polymer or copolymer interact with that of another in a manner that increases the density of the interactions helping to inhibit the mobility of and/or entrap the pigment particles. The interactions between the functional groups may be polar, dispersive, or of a charge transfer complex nature. The functional groups may be located on the polymer or copolymer backbones or be pendant from the backbones.

For example, a monomer, or mixture of monomers, that form a polymer with a positive charge may be used in conjunction with a monomer or monomers that form a polymer with a negative charge to form the binding polymer. As a more specific example, methacrylic acid ("MAA") and 2-hydroxyethylmethacrylate ("HEMA") may be used to provide a MAA/HEMA copolymer that is then mixed with a HEMA/3-(N, N-dimethyl) propyl acrylamide copolymer to form the binding polymer.

As another example, the binding polymer may be composed of hydrophobically-modified monomers including, without limitation, amides and esters of the formula:

CH₃(CH₂)ₓ-L-COCR = CH₂

wherein L may be -NH or oxygen, x may be a whole number from 2 to 24, R may be a C₁ to C₆ alkyl or hydrogen and preferably is methyl or hydrogen. Examples of such amides and esters include, without limitation, lauryl methacrylamide, and hexyl methacrylate. As yet another example, polymers of aliphatic chain extended carbamates and ureas may be used to form the binding polymer.

Preferred binding polymers of the invention are a random block copolymer of HEMA, MAA and lauryl methacrylate ("LMA"), a random block copolymer of HEMA and MAA or HEMA and LMA, or a homopolymer of HEMA. The weight percentages, based on the total weight of the binding polymer, of each component in these embodiments is about 93 to about 100 weight percent HEMA, about 0 to about 2 weight percent MAA, and about 0 to about 5 weight percent LMA.

The molecular weight of the binding polymer must be such that it is somewhat soluble in the lens material and swells in it. The lens material diffuses into the binding polymer and is polymerized and/or cross-linked. However, at the same time, the molecular weight of the binding polymer cannot be so high as to impact the quality of the printed image. Preferably, the molecular weight of the binding polymer is about 7,000 to about 100,000, more preferably about 7,000 to about 40,000, most preferably about 17,000 to about 35.000 Mₚₑₐₖ which corresponds to the molecular weight of the highest peak in the SEC analyses ( = (Mₙ x M_{w})^{½})

For purposes of the invention, the molecular weight is determined using a gel permeation chromatograph with a 90° light scattering and refractive index detectors. Two columns of PW4000 and PW2500, a methanol-water eluent of 75/25 wt/wt adjusted to 50mM sodium chloride and a mixture of polyethylene glycol and polyethylene oxide molecules with well defined molecular weights ranging from 325,000 to 194 are used.

One ordinarily skilled in the art will recognize that, by using chain transfer agents in the production of the binding polymer, by using large amounts of initiator, by using living polymerization, by selection of appropriate monomer and initiator concentrations, by selection of amounts and types of solvent, or combinations thereof, the desired binding polymer molecular weight may be obtained. Preferably, a chain transfer agent is used in conjunction with an initiator, or more preferably with an initiator and one or more solvents to achieve the desired molecular weight. Alternatively, small amounts of very high molecular weight binding polymer may be used in conjunction with large amounts of solvent to maintain a desired viscosity for the binding polymer. Preferably, the viscosity of the binding polymer will be about 4,000 to about 15,000 centipoise at 23° C.

Chain transfer agents useful in forming the binding polymers used in the invention have chain transfer constants values of greater than about 0.01, preferably greater than about 7, and more preferably greater than about 25,000. Suitable such chain transfer agents are known and include, without limitation, aliphatic thiols of the formula R-SH wherein R is a C₁ to C₁₂ aliphatic, a benzyl, a cyclicalipahtic or CH₃(CH₂)ₓ-SH wherein x is 1 to 24, benzene, n-butyl chloride, t-butyl chloride, n-butyl bromide, 2-mercapto ethanol, 1-dodecyl mercaptan, 2-chlorobutane, acetone, acetic acid, chloroform, butyl amine, triethylamine, di-n-butyl sulfide and disulfide, carbon tetrachloride and bromide, and the like, and combinations thereof. Generally, about 0 to about 7 weight percent based on the total weight of polymer formulation will be used. Preferably dodecanethiol, decanethiol, octanethiol, or combinations thereof is used as the chain transfer agent.

Any desirable initiators may be used including, without limitation, ultraviolet, visible light, thermal initiators and the like and combinations thereof. Preferably, a thermal initiator is used, more preferably 2,2-azobis isobutyronitrile and 2,2-azobis 2-methylbutyronitrite. The amount of initiator used will be about 0.1 to about 5 weight percent based on the total weight of the formulation. Preferably, 2,2-azobis 2-methylbutyronitrile is used with dodecanethiol.
The binding polymers of the invention may be made by any convenient polymerization process including, without limitation, radical chain polymerization, step polymerization, emulsion polymerization, ionic chain polymerization, ring opening, group transfer polymerization, atom transfer polymerization, and the like. Preferably, a thermal-initiated, free-radical polymerization is used. Conditions for carrying out the polymerization are within the knowledge of one ordinarily skilled in the art.

Solvents useful in the production of the binding polymer are medium boiling solvents having boiling points between about 120 and 230°C. Selection of the solvent to be used will be based on the type of binding polymer to be produced and its molecular weight. Suitable solvents include, without limitation, diacetone alcohol, cyclohexanone, isopropyl lactate, 3-methoxy 1-butanol, 1-ethoxy-2-propanol, and the like.

The binding polymer of the invention is tailored, in terms of expansion factor in water, to the lens material with which it will be used. Matching or substantially matching the expansion factor of the binding polymer with that of the cured lens material in packing solution avoids the development of stresses within the lens that result in bad optics and lens parameter shifts. Additionally, the binding polymer must be swellable in the lens material, permitting swelling of the image printed using the colorant of the invention. Due to this swelling, the image becomes entrapped within the lens material without any impact on lens comfort.

Pigments useful with the binding polymer in the colorants of the invention are those organic or inorganic pigments suitable for use in contact lenses, or combinations of such pigments. The opacity may be controlled by varying the concentration of the pigment and opacifying agent used, with higher amounts yielding greater opacity. Illustrative organic pigments include, without limitation, pthalocyanine blue, pthalocyanine green, carbazole violet, vat orange # 1, and the like and combinations thereof. Examples of useful inorganic pigments include, without limitation, iron oxide black, iron oxide brown, iron oxide yellow, iron oxide red, titanium dioxide, and the like, and combinations thereof. In addition to these pigments, soluble and non-soluble dyes may be used including, without limitation, dichlorotriazine and vinyl sulfone-based dyes. Useful dyes and pigments are commercially available.

Coating, or wetting, of the pigment particles with binding polymer provides better dispersion of the pigment particles in the bulk binding polymer. The coating may be achieved by use of electrostatic, dispersive, or hydrogen bonding forces to cover the pigment's surface. Preferably, a high shear force is used to disperse the pigment into the binding polymer. The pigment may be added to the binding polymer by dispensing the polymer and pigment into a suitable mixer, such as a rotary shaft mixer and mixing until a homogeneous mixture results, typically for a period of up to about 30 minutes. The mixture may be then fed into a high shear mill, such as an Eiger mill to disperse the pigment into the binding polymer. Repeated milling is carried out as necessary to achieve complete dispersion. Generally, milling is carried out until the pigments are about 0.2 to about 3 microns in size. Milling may be carried out using any suitable, commercially available device including, without limitation, a high shear or ball milling device.

In addition to the pigment and binding polymer, the colorant of the invention contains one or more solvents that aid in coating of the colorant onto a surface. It is another discovery of the invention that, to ensure a colorant that does not bleed or run on the surface to which it is applied, it is desirable, and preferred, that the colorant have a surface tension below about 27 mN/m. This surface tension may be achieved by treatment of the surface, for example a mold surface, to which the colorant will be applied. Surface treatments may be effected by methods known in the art, such as, but not lirnited to plasma and corona treatments. Alternatively, and preferably, the desired surface tension may be achieved by the choice of solvents used in the colorant.

Thus, the solvents useful in the colorant of the invention are those solvents that are capable of increasing or decreasing the viscosity of the colorant and aiding in controlling the surface tension. Suitable solvents include, without limitation, cyclopentanones, 4-methyl-2-pentanone, 1-methoxy-2-propanol, 1-ethoxy-2-propanol, isopropyl lactate and the like and combinations thereof. Preferably, 1-ethoxy-2-propanol and isopropyl lactate are used.

In a preferred embodiment, at least three different solvents are used in the colorant of the invention. The first two of these solvents, both medium boiling point solvents, are used in the production of the binding polymer. Although these solvents may be stripped from the binding polymer after its formation, it is preferred that they are retained. Preferably, the two solvents are 1-ethoxy-2-propanol and isopropyl lactate. An additional low boiling solvent, meaning a solvent the boiling point of which is between about 75 and about 120° C, is used to decrease the viscosity of the colorant as desired. Suitable low boiling solvents include, without limitation, 2-propanol, 1-methoxy-2-propanol, 1-propanol, and the like and combinations thereof. Preferably, 1-propanol is used.

The specific amount of solvents used will depend on a number of factors. For example, the amount of solvents used in forming the binding polymer will depend upon the molecular weight of the binding polymer desired and the constituents, such as the monomers and copolymers, used in the binding polymer. The amount of low boiling solvent used will depend upon the viscosity and surface tension desired for the colorant. Further, if the colorant is to be applied to a mold and cured with a lens material, the amount of solvent used will depend upon the lens and mold materials used and whether the mold material has undergone any surface treatment to increase its wettability. Determination of the precise amount of solvent to be used is within the skill of one ordinarily skilled in the art. Generally, the total weight of the solvents used will be about 40 to about 75 weight percent of solvent will be used.

One ordinarily skilled in the art will recognize that each pigment used will have a critical pigment volume for the solvents selected. The critical pigment volume may be determined by any known means and, generally, is a volume based on the efficiency of a solvent and the binding polymer to suspend the pigment particles for example, as disclosed in Patton, Temple C., *Paint Flow and Pigment Dispersion*, 2d ed., pp 126-300 (1993).

In addition to the solvents, a plasticizer may be and, preferably is, added to the colorant to reduce cracking during the drying of the colorant and optical mold parts, to enhance the final quality of the image produced using the colorant, and to enhance the diffusion and swelling of the colorant by the lens material The type and amount of plasticizer used will depend on the molecular weight of the binding polymer used and, for colorants placed onto molds that are stored prior to use, the shelf-life stability desired. Useful plasticizers include, without limitation, glycerol, propylene glycol, dipropylene glycol, tripropylene glycol, polyethylene glycol 200, 400, or 600, and the like and combinations thereof. Preferably, glycerol is used. Amounts of plasticizer used generally will be 0 to about 10 weight percent based on the weight of the colorant.

The opacity of the colorant may be controlled by varying the pigment concentration and the pigment particle size used. Alternatively, an opacifying agent may be used. Suitable opacifying agents, such as for example titanium dioxide or zinc oxide, are commercially available.

In a preferred colorant mixture of the invention, about 0.2 to about 25 weight percent of pigment, about 30 to about 45 weight percent of binding polymer, about 40 to about 70 weight percent of solvents, about 0 to about 25 weight percent of titanium dioxide, and about 0.2 to about 7 weight percent of plasticizer is used. The weight percentages are based on the total weight of the colorant mixture.

The binding polymer may be loaded with about 0.2 to about 25 weight percent based on the weight of the colorant for organic pigments and about 0.2 to about 50 weight percent for inorganic pigments. However, high pigment concentrations may impart a very dark hue. Therefore, preferably about 0.2 to about 7 weight percent of organic pigments and about 0 to about 20 weight percent of inorganic pigments are used. Combinations of pigments may be used in ratios dependent upon the color, shade, and hue desired.

One ordinarily skilled in the art will recognize that additives other than those discussed also may be included in the colorant composition of the invention. Suitable additives include, without limitation, additives that aid flow and leveling, additives for foam prevention, additives for rheology modification, and the like, and combinations thereof.

The colorant of the invention becomes embedded in the lens material upon curing of the material. Thus, the colorant may embed closer to the front or back surface of the lens formed depending on the surface of the mold to which the lens the colorant is applied. Additionally, one or more layers of colorant may be applied in any order. In yet another embodiment, a clear binding polymer layer may be used in conjunction with the colorant. For example, in the method of the invention a clear binding polymer layer may be applied to the molding surface of a mold half prior to application of the colorant. The clear binding polymer may be the same or different from the binding polymer used for the colorant layers. If the clear binding polymer is different from the binding polymer, it must be compatible with the binding polymer and lens material in terms of expansion factor and swellability and it must be capable of swelling into the lens material.

The invention may be used to provide tinted hard or soft contact lenses made of any known lens material, or material suitable for manufacturing such lenses. Preferably, the lenses of the invention are soft contact lenses having water contents of about 0 to about 90 percent. More preferably, the lenses are made of monomers containing hydroxy groups, carboxyl groups, or both or be made from silicone-containing polymers, such as siloxanes, hydrogels, silicone hydrogels, and combinations thereof. Material useful for forming the lenses of the invention may be made by reacting blends of macromers, monomers, and combinations thereof along with additives such as polymerization initiators. Suitable materials include, without limitation, silicone hydrogels made from silicone macromers and hydrophilic monomers. Examples of such silicone macromers include, without limitation, polydimethylsiloxane methacrylated with pendant hydrophilic groups as described in United States Patents Nos. 4,259,467; 4,260,725 and 4,261,875; polydimethylsiloxane macromers with polymerizable function described in U.S. Patents Nos. 4,136,250; 4,153,641; 4,189,546; 4,182,822; 4,343,927; 4,254,248; 4,355,147; 4,276,402; 4,327,203; 4,341,589; 4,486,577; 4,605,712; 4,543,398; 4,661,575; 4,703,097; 4,837,289; 4,954,586; 4,954,587; 5,346,946; 5,358,995; 5,387,632 ; 5,451,617; 5,486,579; 5,962,548; 5,981,615; 5,981,675; and 6,039,913; and combinations thereof. They may also be made using polysiloxane macromers incorporating hydrophilic monomers such as those described in U.S. Patents Nos. 5,010,141; 5,057,578; 5,314,960; 5,371,147 and 5,336,797; or macromers comprising polydimethylsiloxane blocks and polyether blocks such as those described in U.S. Patents Nos. 4,871,785 and 5,034,461.

Suitable materials also may be made from combinations of oxyperm and ionoperm components such as is described in U.S. Patents Nos. 5,760,100; 5,776,999; 5,789,461; 5,807,944; 5,965,631 and 5,958,440. Hydrophilic monomers may be incorporated into such copolymers, including 2-hydroxyethyl methacrylate ("HEMA"), 2-hydroxyethyl acrylate, N,N-dimethylacrylamide ("DMA"), N-vinylpyrrolidone, 2-vinyl-4,4'-dimethyl-2-oxazolin-5-one, methacrylic acid, and 2-hydroxyethyl methacrylamide. Additional siloxane monomers may be incorporated such as tris(trimethylsiloxy)silylpropyl methacrylate, or the siloxane monomers described in U.S. Patents Nos. 5,998,498; 3,808,178; 4,139,513; 5,070,215; 5,710,302; 5,714,557 and 5,908,906. They may also include various toughening agents, UV blockers, and wetting agents. They can be made using diluents such as primary alcohols, or the secondary or tertiary alcohols described in U.S. Patent No. 6,020,445.

The materials for making the contact lenses are well known and commercially available. Preferably, the material used is a HEMA based hydrogel, more preferably etafilcon A, and the binding polymer is formed from linear random block copolymers of MAA, HEMA and lauryl methacrylate ("LMA"); linear random block copolymers of MAA and HEMA; linear random block copolymers of HEMA and LMA; or a HEMA homopolymer. Etafilcon A, disclosed in U.S. Patent Nos. 4,680.336 and 4,495,313 incorporated herein in their entireties by reference, generally is a formulation of 100 parts by weight ("pbw") HEMA, about 1.5 to about 2.5 pbw MAA, approximately 0.3 to about 1.3 pbw ethylene glycol dimethacrylate, about 0.05 to about 1.5 pbw 1,1, 1,-trimethylolpropane trimethacrylate, and about 0.017 to about 0.024 pbw of a visibility tint. Preferably etafilcon A is used with a linear random block copolymer of MAA, HEMA and LMA in a ratio of 0.47 MAA to 100 HEMA to 4.14 LMA, or with a linear random block copolymer of HEMA and MAA in a ratio of 99.9 HEMA and 0.1 MAA to 99.5 HEMA and 0.5 MAA.

A tinting-effective amount of the colorant is used which is an amount sufficient to impart the desired level of tint to the lens to be produced. Generally, about 0.5 mg to about 4.0 mg of colorant is used per lens.

The colorant used in the lenses of the invention are applied to the lens surface by any convenient method. In a preferred method of the invention, a thermoplastic optical mold, made from any suitable material including, without limitation, polypropylene or polystyrene resin is used. A tinting-effective amount of the colorant is applied to the desired portion of the molding surface of the mold. Application may be canied out by any convenient means. Preferably, application is carried out by pad printing.

A lens-forming amount of a lens material is dispensed into the mold. By "lens-forming amount" is meant an amount sufficient to produce a lens of the size and thickness desired. Typically, about 10 to about 40 mg of lens material is used.

The colorant is swelled in the lens material. Preferably, the swelling is carried out under conditions suitable to swell the colorant to about 1 to about 4 times its dried thickness. Typically, such swelling may be achieved in from about 1 to about 30 minutes at about 40 to about 68 °C.

The mold containing the lens material and colorant then is exposed to conditions suitable to form the tinted lens. The precise conditions will depend upon the components of the colorant and lens material selected and are within the skill of one of ordinary skill in the art to determine. Once curing is completed, the lens is released from the mold and may be equilibrated in a buffered saline solution.

A preferred method of manufacturing a tinted lens is carried out using pad printing as follows. A metal plate, preferably made from steel and more preferably from stainless steel, is covered with a photo resist material that is capable of becoming water insoluble once cured. The pattern for the colorant is selected or designed and then reduced to the desired size using any of a number of techniques such as photographic techniques, placed over the metal plate, and the photo resist material is cured. Conditions for carrying out the pattern etching are within the knowledge of one ordinarily skilled in the art.

Following the pattern, the plate is subsequently washed with an aqueous solution and the resulting image is etched into the plate to a suitable depth, for example about 20 microns. The colorant is then deposited onto the pattern to fill the depressions with colorant. A silicon pad of a suitable geometry and varying hardness, generally about 1 to about 10 Shore A durorneter units, is pressed against the image on the plate to remove the colorant and the colorant is then dried slightly by evaporation of the solvent. The pad is then pressed against the molding surface of an optical mold and the colorant s allowed to dry. The mold is degassed for up to 12 hours to remove excess solvents and oxygen after which the mold is filled with lens forming amount of a lens material. A complementary mold half is then used to complete the mold assembly and, after the printed image is allowed to swell, the mold assembly is exposed to conditions suitable to cure the lens material used.

The invention will be clarified further by consideration of the following, nonlimiting examples.

### Examples

### Example 1-Synthesis of Binding Polymer

To a 5 L glass container was added 2.65 wt percent of dodecanethiol, 1.56 wt percent lauryl methacrylate, 0.18 wt percent MAA, 37.69 wt percent 2-HEMA, and 42.35 wt percent isopropyl lactate and 10.59 wt percent 1-ethoxy-2-propanol as solvents. The mixture was premixed for 10 min. using a magnetic stirrer and then transferred to a 5 L stainless steel reactor with a built-in heating mantel and equipped with a mechanical stirrer, nitrogen inlet, reflux condenser, and a temperature sensor. The mixture was heated to a temperature of approximately 63° C for approximately 25 min, at which point 3.0 wt percent of 2,2-azobis-2-methyl butyronitrile were added with residual isopropyl lactate. Nitrogen was introduced into the reactor to create a nitrogen blanket to be used during the remainder of the polymerization.

After approximately 17 to 19 hrs, 1.96 wt percent of glycerol were added to the reaction mixture and the mixture was stirred for approximately 30 min. Subsequently, the stirring and nitrogen supply were discontinued and the reaction mixture cooled to room temperature.

### Example 2-Synthesis of Binding Polymer

To a 5 L glass container was added 0.69 wt percent of decanethiol, 0.16 wt percent MAA, 33.55 wt percent 2-HEMA. and 51.1 wt percent isopropyl lactate and 12.8 wt percent 1-ethoxy-2-propanol as solvents. The mixture was premixed for 10 min. using a magnetic stirrer and then transferred to a 5 L stainless steel reactor with a built-in heating mantel and equipped with a mechanical stirrer, nitrogen inlet, reflux condenser, and a temperature sensor. The mixture was heated to a temperature of approximately 68° C for approximately 25 min, at which point 0.20 wt percent of 2,2-azobis-2-methyl butyronitrile were added with residual isopropyl lactate. Nitrogen was introduced into the reactor to create a nitrogen blanket to be used during the remainder of the polymerization.

After approximately 17 to 19 hrs, 1.56 wt percent of glycerol were added to the reaction mixture and the mixture was stirred for approximately 30 min. The reaction mixture was heated at 80°C for an additional 23 hours in order to decompose the residual thermal initiator. Subsequently, the stirring and nitrogen supply were discontinued and the reaction mixture cooled to room temperature.

### Example 3

Binding polymers similar to or the same as those of Example 1 were used to make the colorant formulations listed on the table below.

| | **Colorant 1** | **Colorant 2** | **Colorant 3** | **Colorant 4** | **Colorant 5** | **Colorant 6** |
|---|---|---|---|---|---|---|
| Pthalocyanine Blue | 2 | 0 | 0 | 2 | 0 | 0 |
| Iron Oxide Black | 0 | 10 | 0 | 3 | 5 | 0 |
| Iron Oxide Yellow | 0 | 0 | 3 | 15 | 5 | 0 |
| Iron Oxide Brown | 0 | 0 | 8 | 0 | 5 | 0 |
| Iron Oxide Red | 0 | 0 | 2 | 0 | 0 | 0 |
| TiO₂ | 0 | 5 | 5 | 5 | 5 | 0 |
| Total Pigments | 0 | 15 | 18 | 25 | 20 | 0 |
| Binding Polymer | 41.49 | 35.63 | 34.28 | 31.12 | 33.37 | 42.39 |
| Isopropyllactate | 38.96 | 33.46 | 32.19 | 29.22 | 31.34 | 39.81 |
| 1-ethoxy-2-propanol | 9.74 | 8.37 | 8.05 | 7.31 | 7.84 | 9.95 |
| 1-propanol | 6 | 6 | 6 | 6 | 6 | 6 |
| Glycerol | 1.96 | 1.96 | 1.96 | 1.96 | 1.96 | 1.96 |

| | | | | | | |
|---|---|---|---|---|---|---|
| Note: All values listed as weight percent. | | | | | | |

### Example 4

To the binding polymer of Example 1 was added 0.5 wt % of phthalo-cyanine blue pigment and milled to form a blue colorant. An aliquot of the colorant was then pad printed onto a contact lens front curve mold and the printed mold was degassed under vacuum, about 8 hours, in order to remove the volatile solvents from the colorant. The printed mold was dosed with a reactive monomer mixture containing 100 parts by weight ("pbw") HEMA, about 2 pbw MAA, approximately 0.8 pbw ethylene glycol dimethacrylate, about 0.1 pbw 1,1,1,-trimethylolpropane trimethacrylate, about 1 pbw Norbloc® 7966 and about 1.3 pbw Irgacure (photoinitiator, commercially available from Ciba). A contact lens base curve mold was deposited onto the filled front curve mold and the two mold halves were pressed together. A dwell time of approximately two minutes allowed the reactive monomer mix to diffuse into and around the colorant layer, resulting in the swelling of the colorant layer. After completion of the dwell time, the mold assembly was exposed to visible light (approximately 420 nm) for approximately five minutes, whereupon the reactive monomer mixture was polymerized and cross-linked in and around the binding polymer of the colorant layer, forming the semi-interpenetrating polymer network. The mold halves were separated and the tinted lens removed for further processing steps. Thus, the present example shows that a tinted contact lens may be formed from a binding polymer, which is not substantially cross-linked and a base lens material which is cross-linked after diffusing into and around the binding polymer. Beneficially, the pigments which were mixed into the binding polymer are fixed in the resultant contact lens without the need for functionalization or additional bonding steps.

## Claims

1. A colorant for use in tinting contact lenses, the colorant comprising one or more pigments, one or more solvents, and a binding polymer, wherein the binding polymer is capable of forming an interpenetrating polymer network with a lens material.

2. The colorant of claim 1, wherein the interpenetrating polymer network formed is a semi-interpenetrating polymer network.

3. The colorant of claim 1, wherein the interpenetrating polymer network formed is a sequential-interpenetrating polymer network.

4. The colorant of claim 1, wherein the binding polymer comprises a molecular weight of about 7,000 to about 40,000.

5. The colorant of claim 1, wherein the binding polymer comprises:
CH₃(CH₂)ₓ -L-COCR=CH₂
wherein L is -NH- or oxygen, x is a whole number from 2 to 24, R is a C₁ to C₆ alkyl or hydrogen.

6. The colorant of claim 1, wherein the binding polymer comprises a copolymer of methacrylic acid, 2-hydroxyethyl methacrylate, and lauryl methacrylate.

7. The colorant of claim 1, wherein the binding polymer comprises a copolymer of 2-hydroxyethyl methacrylate and methacrylic acid.

8. The colorant of claim 1, wherein the binding polymer comprises a homopolymer of 2-hydroxyethyl methacrylate.

9. The colorant of claim 1, 2, 3,4,6,7 or 8, wherein the one or more solvents comprises at least one medium boiling point solvents and one low boiling point solvent.

10. The colorant of claim 1, 2,3, 4,6,7 or 8, wherein the surface tension is ≤28 dynes/cm.

11. The colorant of claim 6,7 or 8 wherein the medium boiling point solvents comprise 1-ethoxy-2-propanol and isopropyl lactate.

12. The colorant of claim 1, 2, 3,4,6,7 or 8, further comprising a plasticizer and an opacifying agent.

13. The colorant of claim 12, comprising about 0.2 to about 25 weight percent of the one or more pigments, about 30 to about 45 weight percent of the binding polymer, about 40 to about 70 weight percent of the one or more solvents, about 0 to about 25 weight percent of the opacifying agent, and about 0.2 to about 7 weight percent of the plasticizer.

14. The colorant of claim 1, wherein the binding polymer has a molecular weight of about 7,000 to about 40,000, and wherein the binding polymer is capable of forming a interpenetrating polymer network with a lens material comprising a HEMA-based hydrogel or a silicone-based hydrogel.

15. The colorant of claim 14, wherein the interpenetrating polymer network formed between the binding polymer and the lens material is a semi-interpenetrating polymer network

16. The colorant of claim 14, wherein the interpenetrating polymer network formed between the binding polymer and the lens material is a sequential interpenetrating polymer network

17. The colorant of claim 14, wherein the binding polymer comprises a copolymer of methacrylic acid, 2-hydroxyethyl methacrylate, and lauryl methacrylate.

18. The colorant of claim 14, wherein the binding polymer comprises a copolymer of methacrylic acid and 2-hydroxyethyl methacrylate.

19. The colorant of clam 14, wherein the binding polymer comprises a homopolymer of 2-hydroxyethyl methacrylate.

20. The colorant of claims 14-19, wherein the one or more solvents comprises two medium boiling point solvents and one low boiling point solvent.

21. The colorant of claim 20, wherein the two medium boiling point solvents comprise 1-ethoxy-2-propanol and isopropyl lactate.

22. The colorant of claims 14-19 further comprising a plasticizer and an opacifying agent.

23. The colorant of claim 22, comprising about 0.2 to about 25 weight percent of the one or more pigments, about 30 to about 45 weight percent of the binding polymer, about 40 to about 70 weight percent of the one or more solvents, about 0 to about 25 weight percent of the opacifying agent, and about 0.2 to about 7 weight percent of the plasticizer.

24. A method for manufacturing a tinted contact lens comprising the steps of a.) applying to a molding surface of a mold a tinting-effective amount of a colorant comprising one or more pigments, one or more solvents and a binding polymer; b.) dispensing a lens-forming amount of a lens material into the mold; c.) swelling the colorant in the lens material; and d.) curing the lens material in the mold to form the tinted contact lens, wherein the binding polymer and the lens material form an interpenetrating polymer network.

25. The method of claim 24, wherein the binding polymer has a molecular weight of about 7,000 to about 40,000 and the lens material comprises HEMA based hydrogels or silicone-based hydrogels.

26. The method of claim 24, wherein the binding polymer comprises a copolymer of methacrylic acid, 2-hydroxyethyl methacrylate, and lauryl methacrylate.

27. The method of claim 24, wherein the binding polymer comprises a copolymer of methacrylic acid and 2-hydroxyethyl methacrylate.

28. The method of claim 24, wherein the binding polymer comprises a homopolymer of 2-hydroxyethyl methacrylate.

29. The method of claim 24 or 25, wherein the one or more solvents comprises two medium boiling point solvents and one low boiling point solvent.

30. The method of claim 29, wherein the two medium boiling point solvents comprise 1-ethoxy-2-propanol and isopropyl lactate.

31. The method of claim 24 wherein said pigment is coated or wetted with said binding polymer.

32. An ophthalmic lens obtainable by the method of any of claims 24 to 31.

33. The ophthalmic lens of claim 32 wherein said colorant is as defined in claim 23.

## Patentansprüche

1. Färbemittel zur Verwendung beim Färben von Kontaktlinsen, wobei das Färbemittel ein oder mehrere Pigmente, ein oder mehrere Lösemittel und ein Bindungspolymer umfaßt, wobei das Bindungspolymer ein interpenetrierendes Polymemetzwerk mit einem Linsenmaterial bilden kann.

2. Färbemittel nach Anspruch 1, **dadurch gekennzeichnet, daß** das gebildete interpenetrierende Polymernetzwerk ein semi-interpenetrierendes Polymemetzwerk ist.

3. Färbemittel nach Anspruch 1, **dadurch gekennzeichnet, daß** das gebildete interpenetrierende Polymemetzwerk ein sequentiell-interpenetrierendes Polymernetzwerk ist.

4. Färbemittel nach Anspruch 1, **dadurch gekennzeichnet, daß** das Bindungspolymer ein Molekulargewicht von etwa 7.000 bis etwa 40.000 umfaßt.

5. Färbemittel nach Anspruch 1, **dadurch gekennzeichnet, daß** das Bindungspolymer:
CH₃(CH₂)ₓ-L-COCR=CH₂
umfaßt, worin L -NH- oder Sauerstoff ist, x eine ganze Zahl von 2 bis 24 ist, R ein C₁- bis C₆-Alkyl oder Wasserstoff ist.

6. Färbemittel nach Anspruch 1, **dadurch gekennzeichnet, daß** das Bindungspolymer ein Copolymer von Methacrylsäure, 2-Hydroxyethylmethacrylat und Laurylmethacrylat umfaßt.

7. Färbemittel nach Anspruch 1, **dadurch gekennzeichnet, daß** das Bindungspolymer ein Copolymer von 2-Hydroxyethylmethacrylat und Methacrylsäure umfaßt.

8. Färbemittel nach Anspruch 1, **dadurch gekennzeichnet, daß** das Bindungspolymer ein Homopolymer von 2-Hydroxyethylmethacrylat umfaßt.

9. Färbemittel nach Anspruch 1, 2, 3, 4, 6, 7 oder 8, **dadurch gekennzeichnet, daß** das eine oder die mehreren Lösemittel wenigstens ein Lösemittel mit mittlerem Siedepunkt und ein Lösemittel mit niedrigem Siedepunkt umfaßt (umfassen).

10. Färbemittel nach Anspruch 1, 2, 3, 4, 6, 7 oder 8, **dadurch gekennzeichnet, daß** die Oberflächenspannung ≤ 28 dyne/cm beträgt.

11. Färbemittel nach Anspruch 6, 7 oder 8, **dadurch gekennzeichnet, daß** die Lösemittel mit mittlerem Siedepunkt 1-Ethoxy-2-propanol und Isopropyllactat umfassen.

12. Färbemittel nach Anspruch 1, 2, 3, 4, 6, 7 oder 8, das weiter einen Weichmacher und ein Trübungsmittel umfaßt.

13. Färbemittel nach Anspruch 12, das etwa 0,2 bis etwa 25 Gewichtsprozent des einen oder der mehreren Pigmente, etwa 30 bis etwa 45 Gewichtsprozent des Bindungspolymers, etwa 40 bis etwa 70 Gewichtsprozent des einen oder der mehreren Lösemittel, etwa 0 bis etwa 25 Gewichtsprozent des Trübungsmittels und etwa 0,2 bis etwa 7 Gewichtsprozent des Weichmachers umfaßt.

14. Färbemittel nach Anspruch 1, **dadurch gekennzeichnet, daß** das Bindungspolymer ein Molekulargewicht von etwa 7.000 bis etwa 40.000 besitzt und daß das Bindungspolymer ein interpenetrierendes Polymernetzwerk mit einem Linsenmaterial bilden kann, das ein Hydrogel auf HEMA-Basis oder ein Hydrogel auf Silikon-Basis umfaßt.

15. Färbemittel nach Anspruch 14, **dadurch gekennzeichnet, daß** das gebildete interpenetrierende Polymemetzwerk zwischen dem Bindungspolymer und dem Linsenmaterial ein semi-interpenetrierendes Polymemetzwerk ist.

16. Färbemittel nach Anspruch 14, **dadurch gekennzeichnet, daß** das gebildete interpenetrierende Polymemetzwerk zwischen dem Bindungspolymer und dem Linsenmaterial ein sequentiell-interpenetrierendes Polymernetzwerk ist.

17. Färbemittel nach Anspruch 14, **dadurch gekennzeichnet, daß** das Bindungspolymer ein Copolymer von Methacrylsäure, 2-Hydroxyethylmethacrylat und Laurylmethacrylat umfaßt.

18. Färbemittel nach Anspruch 14, **dadurch gekennzeichnet, daß** das Bindungspolymer ein Copolymer von Methacrylsäure und 2-Hydroxyethylmethacrylat umfaßt.

19. Färbemittel nach Anspruch 14, **dadurch gekennzeichnet, daß** das Bindungspolymer ein Homopolymer von 2-Hydroxyethylmethacrylat umfaßt.

20. Färbemittel nach den Ansprüchen 14-19, **dadurch gekennzeichnet, daß** das eine oder die mehreren Lösemittel zwei Lösemittel mit mittlerem Siedepunkt und ein Lösemittel mit niedrigem Siedepunkt umfaßt (umfassen).

21. Färbemittel nach Anspruch 20, **dadurch gekennzeichnet, daß** die zwei Lösemittel mit mittlerem Siedepunkt 1-Ethoxy-2-propanol und Isopropyllactat umfassen.

22. Färbemittel nach den Ansprüchen 14-19, das weiter einen Weichmacher und ein Trübungsmittel umfaßt.

23. Färbemittel nach Anspruch 22, das etwa 0,2 bis etwa 25 Gewichtsprozent des einen oder der mehreren Pigmente, etwa 30 bis etwa 45 Gewichtsprozent des Bindungspolymers, etwa 40 bis etwa 70 Gewichtsprozent des einen oder der mehreren Lösemittel, etwa 0 bis etwa 25 Gewichtsprozent des Trübungsmittels und etwa 0,2 bis etwa 7 Gewichtsprozent des Weichmachers umfaßt.

24. Verfahren zur Herstellung einer gefärbten Kontaktlinse, das die Schritte umfaßt: a.) Aufbringen einer eine Färbung bewirkenden Menge eines Färbemittels, das ein oder mehrere Pigmente, ein oder mehrere Lösemittel und ein Bindungspolymer umfaßt, auf eine Formoberfläche einer Form; b.) Einbringen einer eine Linse bildenden Menge eines Linsenmaterials in die Form; c.) Quellenlassen des Färbemittels im Linsenmaterial; und d.) Aushärten des Linsenmaterials in der Form, um die gefärbte Kontaktlinse zu bilden, wobei das Bindungspolymer und das Linsenmaterial ein interpenetrierendes Polymemetzwerk bilden.

25. Verfahren nach Anspruch 24, **dadurch gekennzeichnet, daß** das Bindungspolymer ein Molekulargewicht von etwa 7.000 bis etwa 40.000 besitzt und das Linsenmaterial Hydrogele auf HEMA-Basis oder Hydrogele auf Silikon-Basis umfaßt.

26. Verfahren nach Anspruch 24, **dadurch gekennzeichnet, daß** das Bindungspolymer ein Copolymer von Methacrylsäure, 2-Hydroxyethylmethacrylat und Laurylmethacrylat umfaßt.

27. Verfahren nach Anspruch 24, **dadurch gekennzeichnet, daß** das Bindungspolymer ein Copolymer von Methacrylsäure und 2-Hydroxyethylmethacrylat umfaßt.

28. Verfahren nach Anspruch 24, **dadurch gekennzeichnet, daß** das Bindungspolymer ein Homopolymer von 2-Hydroxyethylmethacrylat umfaßt.

29. Verfahren nach Anspruch 24 oder 25, **dadurch gekennzeichnet, daß** das eine oder die mehreren Lösemittel zwei Lösemittel mit mittlerem Siedepunkt und ein Lösemittel mit niedrigem Siedepunkt umfaßt (umfassen).

30. Verfahren nach Anspruch 29, **dadurch gekennzeichnet, daß** die zwei Lösemittel mit mittlerem Siedepunkt 1-Ethoxy-2-propanol und Isopropyllactat umfassen.

31. Verfahren nach Anspruch 24, **dadurch gekennzeichnet, daß** besagtes Pigment mit besagtem Bindungspolymer beschichtet oder benetzt wird.

32. Augenlinse, erhältlich mit dem Verfahren nach einem der Ansprüche 24 bis 31.

33. Augenlinse nach Anspruch 32, **dadurch gekennzeichnet, daß** besagtes Färbemittel wie definiert in Anspruch 23 ist.

## Revendications

1. Colorant destiné à être utilisé pour teindre des lentilles de contact, le colorant comprenant un ou plusieurs pigments, un ou plusieurs solvants et un polymère liant, dans lequel le polymère liant est capable de former un réseau polymère interpénétrant avec un matériau de lentille.

2. Colorant selon la revendication 1, dans lequel le réseau polymère interpénétrant formé est un réseau polymère semi-interpénétrant.

3. Colorant selon la revendication 1, dans lequel le réseau polymère interpénétrant formé est un réseau polymère interpénétrant séquentiel.

4. Colorant selon la revendication 1, dans lequel le polymère liant a une masse moléculaire d'environ 7.000 à environ 40.000.

5. Colorant selon la revendication 1, dans lequel le polymère liant comprend :
CH₃ (CH₂)ₓ-L-COOR = CH₂
dans lequel L est - NH - ou de l'oxygène, x est un nombre entier de 2 à 24, R est un groupe alkyle en C₁ à C₆ ou un hydrogène.

6. Colorant selon la revendication 1, dans lequel le liant polymère comprend un copolymère de l'acide méthacrylique, du méthacrylate de 2 - hydroxyéthyle et du méthacrylate de lauryle.

7. Colorant selon la revendication 1, dans lequel le polymère liant comprend un copolymère du méthacrylate de 2 - hydroxyéthyle et de l'acide méthacrylique.

8. Colorant selon la revendication 1, dans lequel le polymère liant comprend un homopolymère du méthacrylate de 2 - hydroxyéthyle.

9. Colorant selon la revendication 1, 2, 3, 4, 6, 7 ou 8, dans lequel le ou les plusieurs solvants comprennent au moins un solvant ayant un point d'ébullition moyen et un solvant ayant un point d'ébullition bas.

10. Colorant selon la revendication 1, 2, 3, 4, 6, 7 ou 8, dans lequel la tension de surface est ≤ 28 dynes/cm.

11. Colorant selon la revendication 6, 7 ou 8, dans lequel les solvants ayant un point d'ébullition moyen comprennent du 1 - éthoxy - 2 - propanol et du lactate d'isopropyle.

12. Colorant selon la revendication 1, 2, 3, 4, 6, 7 ou 8, comprenant en outre un plastifiant et un agent opacifiant.

13. Colorant selon la revendication 12, comprenant d'environ 0,2 à environ 25 % en poids d'un ou de plusieurs pigments, d'environ 30 à environ 45 % en poids du polymère liant, d'environ 40 à environ 70 % en poids d'un ou de plusieurs solvants, d'environ 0 à environ 25 % en poids de l'agent opacifiant, et d'environ 0,2 à environ 7 % en poids du plastifiant.

14. Colorant selon la revendication 1, dans lequel le polymère liant a une masse moléculaire d'environ 7.000 à environ 40.000 et dans lequel le polymère liant est capable de former un réseau polymère interpénétrant avec un matériau de lentille comprenant un hydrogel à base de HEMA ou un hydrogel à base de silicone.

15. Colorant selon la revendication 14, dans lequel le réseau polymère interpénétrant formé entre le polymère liant et le matériau de lentille est un réseau polymère semi-interpénétrant.

16. Colorant selon la revendication 14, dans lequel le réseau polymère interpénétrant formé entre le polymère liant et le matériau de lentille est un réseau polymère interpénétrant séquentiel.

17. Colorant selon la revendication 14, dans lequel le polymère liant comprend un copolymère de l'acide méthacrylique, du méthacrylate de 2 - hydroxyéthyle et du méthacrylate de lauryle.

18. Colorant selon la revendication 14, dans lequel le polymère liant comprend un copolymère de l'acide méthacrylique et du méthacrylate de 2 - hydroxyéthyle.

19. Colorant selon la revendication 14, dans lequel le polymère liant comprend un homopolymère du méthacrylate de 2 - hydroxyéthyle.

20. Colorant selon les revendications 14 - 20, dans lequel le ou les plusieurs solvants comprennent deux solvants ayant un point d'ébullition moyen et un solvant ayant un point d'ébullition bas.

21. Colorant selon la revendication 20, dans lequel les deux solvants ayant un point d'ébullition moyen comprennent du 1 - hydroxy - 2 - propanol et du lactate d'isopropyle.

22. Colorant selon les revendications 14 - 19, comprenant en outre un plastifiant et un agent opacifiant.

23. Colorant selon la revendication 22, comprenant d'environ 0,2 à environ 25 % en poids d'un ou de plusieurs pigments, d'environ 30 à environ 45 % en poids du polymère liant, d'environ 40 à environ 70 % en poids d'un ou de plusieurs solvants, d'environ 0 à environ 25 % en poids de l'agent opacifiant et d'environ 0,2 à environ 7 % en poids du plastifiant.

24. Procédé de fabrication d'une lentille de contact teintée comprenant les étapes consistant à : a) appliquer à une surface de moulage d'un moule une quantité efficace pour teindre d'un colorant comprenant un ou plusieurs pigments, un ou plusieurs solvants et un polymère liant ; b) répartir dans le moule une quantité d'un matériau de lentilles permettant de former des lentilles; c) faire gonfler le colorant dans le matériau de lentilles ; et d) faire cuire le matériau de lentilles dans le moule pour former les lentilles de contact teintées, dans lequel le polymère liant et le matériau de lentilles forment un réseau polymère interpénétrant.

25. Procédé selon la revendication 24, dans lequel le polymère liant a une masse moléculaire moyenne d'environ 7.000 à environ 40.000 et le matériau de lentilles comprend des hydrogels à base de HEMA ou des hydrogels à base de silicone.

26. Procédé selon la revendication 24, dans lequel le polymère liant comprend un copolymère de l'acide méthacrylique, du méthacrylate de 2 - hydroxyéthyle et du méthacrylate de lauryle.

27. Procédé selon la revendication 24, dans lequel le polymère liant comprend un copolymère de l'acide méthacrylique et du méthacrylate de 2 - hydroxyéthyle.

28. Procédé selon la revendication 24, dans lequel le polymère liant comprend un homopolymère du méthacrylate de 2 - hydroxyéthyle.

29. Procédé selon la revendication 24 ou 25, dans lequel le ou les plusieurs solvants comprennent deux solvants ayant un point d'ébullition moyen et un solvant ayant un point d'ébullition bas.

30. Procédé selon la revendication 29, dans lequel les deux solvants ayant un point d'ébullition moyen comprennent du 1 - éthoxy - 2 - propanol et du lactate d'isopropyle.

31. Procédé selon la revendication 24, dans lequel ledit pigment est revêtu ou mouillé avec ledit polymère liant.

32. Lentille ophtalmique pouvant être obtenue par le procédé selon l'une quelconque des revendications 24 à 31.

33. Lentille ophtalmique selon la revendication 32, dans laquelle ledit colorant est comme défini à la revendication 23.
